# EUROPÄISCHE PATENTANMELDUNG

(11) **EP 1 775 096 A1**
(43) Veröffentlichungstag der Anmeldung: **18.04.2007**
(21) Anmeldenummer: 06121965.5
(22) Anmeldetag: 09.10.2006
(51) Int. Cl.: B29C 45/17

(54) **Verfahren zur Herstellung spritzgegossener Formteile aus Kunststoff**

(30) Priorität: 17.10.2005 DE 102005049919
(71) Anmelder: Adcuram Maschinenbauholding GmbH, 80333 München (DE)
(72) Erfinder: Eckardt, Helmut, 58540 Meinerzhagen (DE)
(74) Vertreter: Gosdin, Michael

(57) **Zusammenfassung**

Die Erfindung betrifft ein Verfahren zum Spritzgießen von mindestens einen Hohlraum aufweisenden Formteilen aus thermoplastischem Kunststoffmaterial, das die Schritte aufweist: a) Einspritzen einer vorgegebenen Menge von thermoplastischer Kunststoffschmelze von einer Einspritzeinheit entlang eines Schmelzefließweges in die Kavität eines Spritzgießwerkzeugs; b) Einspritzen eines Fluids in das noch schmelzflüssige Kunststoffmaterial, so dass dieses mindestens teilweise an die Wandungen der Kavität gepresst wird; c) Abkühlenlassen des Kunststoffmaterials, bis dieses selbsttragend das Formteil bildet; d) Entformen des Formteils aus der Kavität des Spritzgießwerkzeugs.

Erfindungsgemäß ist dabei vorgesehen, dass als Fluid, das gemäß Schritt b) in das noch schmelzflüssige Kunststoffmaterial eingespritzt wird, ein Gas eingesetzt wird, wobei während oder nach Schritt b) und vor Schritt c) dem Gas ein Kühlmedium, vorzugsweise Wasser, zugesetzt wird.

## Beschreibung

Die Erfindung betrifft ein Verfahren zum Spritzgießen von mindestens einen Hohlraum aufweisenden Formteilen aus thermoplastischem Kunststoffmaterial, das die Schritte aufweist: a) Einspritzen einer vorgegebenen Menge von thermoplastischer Kunststoffschmelze von einer Einspritzeinheit entlang eines Schmelzefließweges in die Kavität eines Spritzgießwerkzeugs; b) Einspritzen eines Fluids in das noch schmelzflüssige Kunststoffmaterial, so dass dieses mindestens teilweise an die Wandungen der Kavität gepresst wird; c) Abkühlenlassen des Kunststoffmaterials, bis dieses selbsttragend das Formteil bildet; d) Entformen des Formteils aus der Kavität des Spritzgießwerkzeugs.

Die Herstellung von spritzgegossenen Formteilen mit Unterstützung von Gas ist seit vielen Jahren bekannt.

Vorteilhaft bei dieser Technik ist, dass gezielt Hohlräume im Formteil erzeugt werden und dort der der Schwindung beim Abkühlen entgegenwirkende Druck durch den Gasdruck aufgebracht wird.

Nachteilig bei dieser Technik sind jedoch die langen Kühlzeiten. Das Gas hat nur eine geringe Wärmeleitung und eine geringe Wärmekapazität. Die Kühlwirkung des mit Raumtemperatur eingespritzten Gases ist nur sehr gering. Die Kühlzeiten insbesondere bei größeren Wanddicken können bei diesem Verfahren nicht zufrieden stellen.

Um die Kühlzeiten zu verringern, wurde bereits gekühltes Gas eingespritzt. Hierbei gibt es die Möglichkeit, das Gas bereits vor dem Einbringen in das Druckregelventil herunterzukühlen. Nachteilig hierbei ist, dass das Gas bereits beim Durchströmen des Druckventils wieder erwärmt wird.

Eine andere Möglichkeit ist, das Gas erst beim Einspritzen nach Verlassen des Druckventils nach dem Prinzip des Wärmetauschers herunterzukühlen, d.h. unmittelbar vor dem Eintreten des Gases in die Schmelze.

Nachteilig beim Einspritzen von tiefgekühltem Gas ist jedoch, dass aufgrund der geringen Wärmekapazität und Wärmeleitung des Gases eine einmalige Einspritzung von Gas noch keinen ausreichenden Kühleffekt bringt. Es ist erforderlich, den Hohlraum im Formteil mit einem größerem Gasvolumen zu durchspülen, um den gewünschten Kühleffekt zu erzielen. Um dieses Durchströmen mit tiefgekühltem Gas zu erreichen muss der Formnesthohlraum mindestens zwei Gaseintrittsöffnungen aufweisen. Nachteilig bei beiden Verfahren ist, dass zum Erreichen deutlicher Kühlzeitverkürzungen gegenüber der Einspritzung von Gas mit Raumtemperatur ein Vielfaches des sonst erforderlichen Gasvolumens eingespritzt werden muss.

Ein weiteres Verfahren zur Herstellung von Formteilen mit Hohlräumen, die kürzere Kühlzeiten als Gasinnendruck- Formteile benötigen, ist die Wasserinjektionstechnik. Anstelle vom Gas wird hier Wasser zur Bildung der Hohlräume in das Formnest eingespritzt. Vorteilhaft sind die kürzeren Kühlzeiten durch die Innenkühlung des Hohlraumes mit Wasser. Nachteilig ist jedoch der recht große apparative Aufwand, der zur Einspritzung des Wassers betrieben werden muss.

Auch ist die vollständige Entfernung des Wassers aus dem Formteil vor Öffnen des Werkzeuges nicht einfach zu lösen.

Als nachteilig bei diesem Verfahren hat sich herausgestellt, dass durch die sofort einsetzende Innenkühlung des Wassers im geformten Hohlraum eine Erstarrung des Kunststoffes an der Innenseite des Kanals unmittelbar bei der Einspritzung des Wassers einsetzt und somit die Wirkung des Wassers als Nachdruck zum Ausgleich der Volumenkontraktion und Volumenschwindung des Kunststoffes herabsetzt.

Es ist auch bekannt, zur Verbesserung des Kühleffektes weiteres Wasser durch den Hohlraum im Formteil zirkulieren zu lassen. Dies bedingt jedoch einen hohen apparativen Aufbau und einen komplizierten Verfahrensablauf.

Es ist auch bekannt, zunächst eine bestimmte Menge Kühlmittel in das Werkzeug einzuspritzen und danach Gas, auch zusammen mit weiterem Kühlmittel, einzuspritzen.

Als Oberbegriff für die Gas- und Wasserinjektionstechnik hat sich der Begriff Fluidinjektionstechnik bewährt, da das Wort Fluid sowohl Gase als auch Flüssigkeiten umfasst.

**Aufgabe** der Erfindung ist es, das bekannte und bewährte Gasinnendruckverfahren derart weiterzuentwickeln, dass eine geringere Kühlzeit bis zur Entformung erreicht wird, ohne den apparativen Aufbau wesentlich zu vergrößern. Die Nachteile der zuvor beschriebenen Verfahren sollen dabei vermieden werden.

Die Aufgabe wird in Verbindung mit dem Oberbegriff des Anspruches 1 dadurch **gelöst,** dass als Fluid, das gemäß Schritt b) in das noch schmelzflüssige Kunststoffmaterial eingespritzt wird, ein Gas eingesetzt wird, wobei während oder nach Schritt b) und vor Schritt c) dem Gas ein Kühlmedium, vorzugsweise Wasser, zugesetzt wird.

Die Vorteile des Gases beim Einspritzen sind die einfache Handhabung und die einfache Abdichtung der Gaseinspritzstelle. Die Vorteile der Wasserinjektionstechnik sind die kurzen Kühlzeiten durch die gute Kühlwirkung des Wassers. Die Erfindung nutzt beide Verfahren mit dem Ziel, die Vorteile beider Verfahren miteinander zu kombinieren.

Grundsätzlich erfolgt der Ablauf des erfindungsgemäßen Verfahrens ähnlich wie bei den bekannten Gasinjektions- und Wasserinjektionsverfahren.

Das erfindungsgemäße Verfahren wird in folgender Weise durchgeführt:

Das Werkzeug befindet sich in einer für die Verarbeitungstechnik geeigneten Verarbeitungsmaschine, vorzugsweise einer Spritzgießmaschine.

Das Werkzeug mit mindestens zwei Teilen, die das Formteilvolumen bilden, weist mindestens eine Öffnung zum Einspritzen des Kunststoffes und mindestens eine Öffnung zum Einspritzen des Fluids auf, wobei die Öffnungen für Kunststoff und Fluid die gleichen oder unterschiedliche sein können.

Die Schließeinheit fährt zu und das Werkzeug schließt. Der erforderliche Schließdruck wird aufgebaut. Es wird eine bestimmte Menge Kunststoff in den Formnesthohlraum eingespritzt, die mindestens einen Teil der Wandungen des Formnestes berührt. Bereits unmittelbar nach Beginn der Einspritzung des Kunststoffes in das Werkzeug, das eine niedrigere Temperatur als der Kunststoff aufweist, beginnt die Abkühlung des Kunststoffes.

Zu einem vorwählbaren Zeitpunkt nach Beginn der Kunststoffeinspritzung erfolgt die Einspritzung des Fluids, beispielsweise Gases. Als Gas wird vorzugsweise N₂ wegen seines inerten Verhaltens eingesetzt. Es können aber auch andere geeignete Gase verwendet werden.

Zusammen mit oder unmittelbar danach erfolgt die Einspritzung von weiterem Gas, das mit einem Kühlmedium, vorzugsweise Wasser vermischt ist. Dabei kann die Mischung von Gas und Wasser während der Einspritzung des Gases verändert werden. So kann z. B. mit einem sehr geringen Anteil an Wasser im Gas begonnen werden, danach der Wasseranteil erhöht und gegen Ende der Einspritzung wieder reduziert werden. Bei diesem Vorgang ist zu berücksichtigen, dass der Füllprozess der Formteile mit Gas vorzugsweise in sehr kurzer Zeit erfolgt. Statt Wasser als Kühlmedium können auch andere geeignete Flüssigkeiten verwendet werden.

Das im Gas gelöste Wasser tritt als Gas- Wasser- Gemisch in die zuvor eingespritzte Schmelze ein und formt den Hohlraum in Kunststoff. Je nach Zusammensetzung des Gemisches wird es als Gas mit entsprechendem Wasseranteil oder als Wasser mit entsprechendem Gasanteil eingespritzt. In jedem Fall bewirkt der Wasseranteil durch seinen höheren Wärmeinhalt- ca. 4x so gut wie N₂-und seine sehr viel bessere Wärmeleitung - ca. 40x so gut wie N₂ eine intensive Kühlung des Kunststoffes an der Innenwand des Hohlraums.

Der Wasseranteil im eingespritzten Gas Wasser- Gemisch verdampft zumindest teilweise während der Kühlung des Formteils im Werkzeug. Auch während des Kühlprozesses wird der Druck des Gas- WasserGemisches zumindest teilweise aufrecht gehalten.

Wenn die Kühlung des Kunststoffes im Werkzeug soweit erfolgt ist, dass der Kunststoff formstabil ist, kann das Werkzeug geöffnet und das hergestellte Formteil entnommen werden.

Vor dem Öffnen des Werkzeuges wird der im Formnest-Inneren vorhandene Druck infolge der Gas- Wassereinspritzung abgebaut.

Bei der Einspritzung des Gases in Verbindung mit dem Wasser als Kühlmedium kann es zu einem Zerstäuben des eingespritzten Mediums kommen. Hierdurch wird die Verdampfung des eingespritzten Mediums im Formnest begünstigt. Ferner bewirkt die Durchsetzung des Kühlmediums mit Gas am Ende der Kühlzeit ein schnelles Entfernen des Gas-Kühlmedium- Gemisches aus dem Formnest.

Die Einspritzung von Gas und Wasser kann in unterschiedlicher Weise erfolgen. Vorzugsweise erfolgt die Einspritzung eines Gas- WasserGemisches. Es kann jedoch zunächst auch nur eine bestimmte Menge Gas erfolgen.

Das Einspritzen des Gas- Wasser- Gemisches kann zumindest teilweise druck- oder volumenkontrolliert erfolgen.

Die druck- oder volumenkontrollierte Einspritzung kann in Profilform erfolgen.

Auch kann die Einspritzung in Intervallen erfolgen: Gas- Wasser- Gas-Wasser...

Dabei können Gas und Wasser auch impulsartig gleichzeitig, nacheinander mit oder ohne Zeitverzögerungen eingespritzt werden.

Nach der Einspritzung von Gas oder Gas- Wasser- Gemisch kann eine Druckentlastung vorgenommen werden, der eine nachfolgende Einspritzung von Wasser folgt. Danach kann ein erneuter Druckabbau erfolgen und die Einspritzung von erneut Wasser oder Gas erfolgen.

Als vorteilhaft bei diesem Verfahren hat sich herausgestellt, dass das eingespritzte Gas oder das Gas- Wasser- Gemisch beim Einspritzen in die heiße Schmelze diese nicht sofort schockartig abkühlt, sondern bei der Formung des Hohlraumes gezielt eine Kühlung erreicht. Die Kühlwirkung kann durch das Gas- Wasser- Gemisch optimal auf den verwendeten Kunststoff und die geforderten Eigenschaften des Formteils abgestimmt werden.

Vorteilhaft ist auch die gegenüber der Wasserinjektionstechnik sehr viel einfachere Abdichtung der Einspritzdüsen im Werkzeug zwischen eingespritztem Gas- Wasser- Gemisch und Kunststoff.

Die Kühlung durch das Gas- Wasser- Gemisch ist deutlich kürzer als beim Gasinnendruckverfahren. Sie kann durch das Mischungsverhältnis und die zuvor beschriebenen Verfahrens- und Einspritzparameter optimal auf die Erfordernisse von Kunststoff und Formteil abgestimmt werden.

Das erfindungsgemäße Verfahren kann mit allen Verfahrensvarianten der Gasinnendruck- Technik und der Wasserinjektionstechnik wie z.B. Teilfüllung, vollständige Füllung der Kavität und Schwindungsausgleich durch das Gas, vollständige Füllung der Kavität mit anschließender Verdrängung eines Teils der Schmelze in eine oder mehrere Überlaufkavitäten, Masserückdrückverfahren und anderen verwendet werden. Auch die bekannten Spültechniken des Formnesthohlraumes können zur Anwendung kommen.

Das Verfahren kann auch in Verbindung mit der Gasgegendruck-Spritzgießtechnik, d.h. Füllung des Formnestes gegen einen Gasgegendruck, erfolgen.

Auch eine Kombination mit den verschiedenen Verfahren der Mehrkomponenten- Technik und dem Sandwichspritzgießen ist möglich.

Zur Durchführung des Verfahrens kommen Komponenten zum Einsatz, wie sie für die Gas- und Wasserinjektionstechnik verwendet werden. Dabei ist von Bedeutung, dass bei den Vorrichtungen Mittel vorgesehen werden, die verfahrensgemäßen Bedingungen erfüllen können.

Besondere Bedeutung kommt der Vermischung und Einspritzung des Gases und des Wassers zu.

Die Einspritzung von Gas und Wasser erfolgt unter einem Druck, der ausreichend ist, in die zuvor eingespritzte Schmelze einzudringen.

Das Gas wird auf Druck gebracht und in einem Behälter auf Druck gehalten. Über geeignete Ventile werden Druck und/ oder Menge für die Einspritzung kontrolliert bzw. geregelt. Dabei kommen Druckventile bzw. Druckregelmodule zum Einsatz.

Das Wasser wird auf den für die Einspritzung erforderlichen Druck gebracht.

Menge und Druck für die Einspritzung werden mit geeigneten Ventilen eingestellt. Dabei können Druck und/ oder Menge des Wassers gesteuert oder geregelt werden. Die Druckventile bzw. Druckregelventile erfüllen diese Aufgabe.

In einem Ventil oder einer Mischdüse werden Gas und Wasser vor der Einspritzung zusammengebracht.

Die Zumischung des Wassers zum Gas kann auf unterschiedliche Weise erfolgen:

Das eingespritzte Gas zieht Wasser nach dem Venturi- Effekt ein. Vorteilhaft bei dieser Methode ist, dass das Wasser nicht erst auf einen erhöhten Druck gebracht werden muss.

Es kann auch Wasser aus einem Behälter, der nicht unter Druck steht, nach diesem Prinzip zugemischt werden.

Ein geringer Druck des Wassers kann auch vorteilhaft sein. Der Druck des Leitungsnetzes wird in vielen Fällen ausreichend sein.

Wird Wasser unter einem ähnlich hohen Druck wie das Gas bereitgestellt, so kann das Wasser gezielt in das Gas eingespritzt werden.

Durch geeignete Ventilmittel wird verhindert, dass das Gas bzw. das Wasser in die nicht dafür vorgesehenen Leitungen eindringen kann. Dafür eignen sich bekannte Rückschlagventile, gesteuerte Rückschlagventile und geeignete Druck-, Mengen- oder Wegeventile.

Zur Druckentlastung werden ebenfalls bekannte geeignete Ventile entsprechend eingesetzt.

Zur Verbesserung der Vermischung von Gas und Wasser können geeignete Mischelemente zwischen der Stelle der Vermischung und der Gaseinspritzung im Werkzug zum Einsatz kommen.

Für die Einspritzung des Gas- Wasser- Gemisches eignen sich die üblicherweise für die Gas- und Wasserinjektionstechnik eingesetzten Düsen. Die Düsen können als Spaltdüsen ohne Verschluss oder aber mit gesteuertem oder geregeltem Verschluss arbeiten.

## Patentansprüche

1. Verfahren zum Spritzgießen von mindestens einen Hohlraum aufweisenden Formteilen aus thermoplastischem Kunststoffmaterial, das die Schritte aufweist:
a) Einspritzen einer vorgegebenen Menge von thermoplastischer Kunststoffschmelze von einer Einspritzeinheit entlang eines Schmelzefließweges in die Kavität eines Spritzgießwerkzeugs;
b) Einspritzen eines Fluids in das noch schmelzflüssige Kunststoffmaterial, so dass dieses mindestens teilweise an die Wandungen der Kavität gepresst wird;
c) Abkühlenlassen des Kunststoffmaterials, bis dieses selbsttragend das Formteil bildet;
d) Entformen des Formteils aus der Kavität des Spritzgießwerkzeugs;
**dadurch gekennzeichnet, dass**
als Fluid, das gemäß Schritt b) in das noch schmelzflüssige Kunststoffmaterial eingespritzt wird, ein Gas eingesetzt wird,
wobei während oder nach Schritt b) und vor Schritt c) dem Gas ein Kühlmedium, vorzugsweise Wasser, zugesetzt wird.

2. Verfahren nach Anspruch 1, **dadurch gekennzeichnet, dass** das Mischungsverhältnis von Fluid, beispielsweise Gas, zu Kühlmedium, beispielsweise Wasser, während oder nach der Einspritzung verändert wird.

3. Verfahren nach Anspruch 1 oder 2, **dadurch gekennzeichnet, dass** der Druck oder das Volumen des Gemisches wenigsten zeitweise gesteuert oder geregelt wird.

4. Verfahren nach einem der vorherigen Ansprüche, **dadurch gekennzeichnet, dass** das Kühlmedium vor der Mischung mit dem Fluid temperiert, beispielsweise gekühlt oder geheizt, wird.
